# EUROPÄISCHE PATENTSCHRIFT

(11) **EP 2 992 307 B1**
(45) Veröffentlichungstag und Bekanntmachung des Hinweises auf die Patenterteilung: **11.07.2018**
(21) Anmeldenummer: 14781461.0
(22) Anmeldetag: 12.09.2014
(51) Int. Cl.: G01K 7/16, G01K 1/16, G01K 1/08

(54) **ANORDNUNG EINES TEMPERATURSENSORS MIT EINER ELEKTRISCH UND THERMISCH ISOLIERENDEN UMHÜLLUNG**
TEMPERATURE SENSOR ARRANGEMENT WITH AN ELECTRICALLY AND THERMALLY INSULATING COVERING
ENSEMBLE CAPTEUR DE TEMPÉRATURE POURVU D'UNE ENVELOPPE ÉLECTRIQUEMENT ET THERMIQUEMENT ISOLANTE

(30) Priorität: 23.09.2013 DE 102013219094
(43) Veröffentlichungstag der Anmeldung: 09.03.2016
(73) Patentinhaber: Conti Temic Microelectronic GmbH, 90411 Nürnberg (DE)
(72) Erfinder: KEUTEN, Matthias, 90518 Altdorf (DE); VÖGERL, Andreas, 92331 Parsberg (DE); HENNIGER, Jürgen, 91056 Erlangen-Dechsendorf (DE); WIECZOREK, Matthias, 91233 Neunkirchen am Sand (DE); WITTMANN, Lisa-Maria, 91793 Alesheim (DE)
(74) Vertreter: Bonn, Roman Klemens
(86) Internationale Anmeldenummer: PCT/EP2014/069507
(87) Internationale Veröffentlichungsnummer: WO 2015/039964

(56) Entgegenhaltungen:
- DE-A1- 3 044 419
- DE-A1- 4 108 789
- DE-A1- 4 339 631

## Beschreibung

Die Erfindung betrifft eine Anordnung eines Sensors nach dem Oberbegriff des Anspruchs 1.

Temperatursensoren, insbesondere zur Messung der Medientemperatur wie Öl oder Kühlflüssigkeit in einem Kraftfahrzeug, verändern in der Regel ihre elektrischen Eigenschaften in Abhängigkeit der vorherrschenden Temperatur. Zum Beispiel sinkt bei der Erwärmung eines Sensorbauteils aus Kohle oder einem Halbleitermaterial dessen elektrischer Widerstand. Durch die Widerstandsmessung im Bereich der großen Steigung lässt sich somit die Temperatur ziemlich genau ermitteln. Solche Werkstoffe leiten den Strom heiß besser als kalt, sie werden daher auch Heißleiter oder NTC (Negative Temperature Coefficient)-Widerstände genannt. Metalle wie zum Beispiel Platin zeigen den gegenteiligen Effekt und werden daher PTC (Positive Temperature Coefficient)-Widerstände genannt.

In der Regel wird der Sensorwiderstand, der vom Medium direkt umgeben ist, mit seinen beiden Anschlüssen, die als Pins oder Beinchen ausgeführt sein können, an eine Versorgungsspannung angelegt. Die an einem zum Sensorwiderstand abfallende Spannung wird in einem Steuergerät ermittelt und ausgewertet.

Der Temperatureintrag vom Medium zum Sensor kann über die beiden Anschlussbeinchen und gleichzeitig über die Seitenflächen des Sensorbausteins erfolgen. Dabei ist die die Temperatur übertragende Fläche der Anordnung groß, die Ansprechzeit des Messvorgangs daher kurz. Jedoch ist die Gefahr eines Kurzschlusses zwischen den Anschlussbeinchen insbesondere durch Späne, wie sie in einem Motor oder einem Getriebe durch Abrieb zwischen sich drehenden Teilen durchaus vorkommen, groß.

Temperatursensoren aus dem Stand der Technik sind beispielsweise aus DE3044419 A1, DE4339631 A1, DE4108789 A1, DE10052116 A1, EP2037247 A2 bekannt. Es ist daher eine Aufgabe der vorliegenden Erfindung, eine Anordnung eines Sensors zur Messung der Temperatur eines Mediums in einem Kraftfahrzeug der eingangs genannten Art derart zu schaffen, dass bei erhöhter Kurzschlusssicherheit gleichzeitig eine möglichst kurze Ansprechzeit garantiert ist.

Diese Aufgabe ist erfindungsgemäß gelöst durch eine Anordnung mit den Merkmalen des Anspruchs 1. Die erfindungsgemäße Anordnung des Sensors umfasst im wesentlichen einen Sensorkörper und Anschlussdrähte, wobei der Sensorkörper mittels einer den Sensorkörper vollständig umgebenden Umhüllung elektrisch und thermisch vom Medium isoliert ist, und mit dem Medium im wesentlichen über die Anschlussdrähte wärmeleitend in Kontakt steht. Die Umhüllung umgibt zwangsläufig auch größtenteils die Anschlussdrähte, zumindest im Bereich des Sensorkörpers, wodurch die Gefahr eines Kurzschlusses zwischen den Anschlussdrähten, insbesondere durch Späne, erheblich reduziert wird. Das Sensorsignal kann an den so isoliert gehaltenen Anschlussdrähten abgegriffen und zur Auswertung einer Auswerteeinheit, insbesondere einem Steuergerät zugeführt werden.

Die Umhüllung ist erfindungsgemäß aus einem elektrisch und größtenteils thermisch isolierenden Material, wie zum Beispiel einem Duroplast oder einem Thermoplast, wobei die thermische Leitfähigkeit dieser Materialien in der Regel in einem Bereich von 0,2 bis 0,5 W/m K liegt.

Eine weitere Vergrößerung der mit dem Medium wärmeleitend in Kontakt tretende Oberfläche der Anordnung, und somit eine weitere Verkürzung der Ansprechzeit, kann erfindungsgemäß dadurch erreicht werden, indem der thermische Kontakt des Anschlusskontakts mit dem Medium mittels einer zusätzlichen Vorrichtung hergestellt wird. Dabei ist im besonderen die Kontaktoberfläche der Vorrichtung, die nicht von der Umhüllung umgeben ist, und somit mit dem Medium direkt wärmeleitend in Kontakt ist, größer ist als die Kontaktoberfläche des Anschlusskontakts mit dem Medium. Der Einfachheit halber kann die Vorrichtung jeweils ein Teil des Anschlusskontakts sein, zum Beispiel in einem Stanzgitter integriert sein. Vorteilhafterweise ist jeder Anschlussdraht über einen separaten Anschlusskontakt mit einem Kontaktsockel, an dem das Sensorsignal abgegriffen werden kann, elektrisch leitend verbunden. Der Anschlusskontakt kann insbesondere als Stanzgitter ausgeführt sein. Um die Ansprechzeit des Messverfahrens zu verbessern, kann insbesondere die mit dem Medium wärmeleitend in Kontakt tretende Oberfläche der Anordnung vergrößert werden, indem mindestens ein Teil mindestens eines Anschlusskontakts nicht von der Umhüllung umgeben ist, und somit mit dem Medium direkt wärmeleitend in Berührung kommt.

Speziell kann die Umhüllung als eine Umspritzung, ein Verguss oder ein mehrteiliges Gehäuse, zum Beispiel aus einem Deckel und einem Gehäuseunterteil, ausgeführt sein.
Je nach Einsatzgebiet kann der Sensor als NTC (Negative Temperature Coefficient)-Widerstand, zum Beispiel aus Kohle oder einem Halbleitermaterial, mit einem negativen Temperaturkoeffizienten, oder als PTC (Positive Temperature Coefficient)-Widerstand, insbesondere aus Metall, mit einem positiven Temperaturkoeffizienten ausgeführt sein.
Eine nähere Beschreibung der vorliegenden Erfindung erfolgt anhand der beigefügten Zeichnungen.
Es zeigen
Fig. 1 eine Vorderansicht der Anordnung,
Fig. 2 eine Schnittdarstellung der Anordnung,
Fig. 3 eine weitere Schnittdarstellung der Anordnung, und
Fig. 4 eine Seitenansicht der Anordnung.

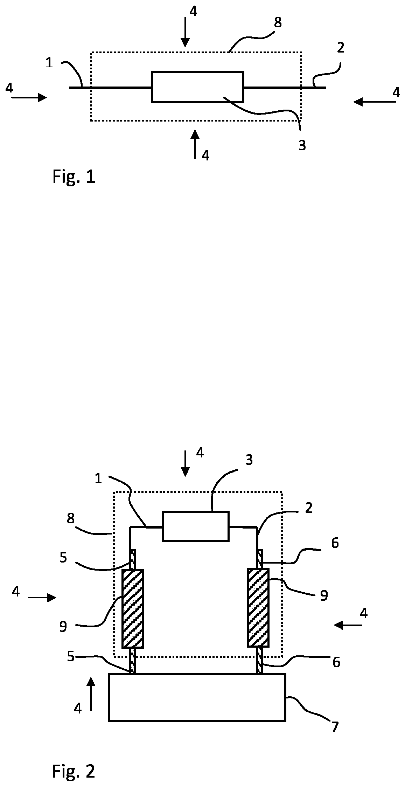

Fig. 1 zeigt eine Anordnung eines Sensors zur Messung der Temperatur eines Mediums 4 in einem Kraftfahrzeug, wobei der Sensor einen Sensorkörper 3 und zwei Anschlussdrähte 1, 2 umfasst. Der Sensorkörper 3 ist mittels einer den Sensorkörper 3 vollständig umgebenden Umhüllung 8 elektrisch und thermisch vom umgebenden Medium 4 isoliert. Der Sensorkörper steht mit dem Medium im wesentlichen über die Anschlussdrähte 1, 2 wärmeleitend in Kontakt.
Das elektrisch und thermisch isolierende Material der Umhüllung kann sein en handelsübliches Duroplast oder Thermoplast.

Fig. 2 zeigt einen Schnitt durch die Anordnung. Jeder Anschlussdraht 1, 2 ist über einen separaten Anschlusskontakt 5, 6 mit einem Kontaktsockel 7 elektrisch leitend verbunden, wobei der Sensorkörper 3, die Anschlussdrähte 1, 2 und die zugehörigen Anschlusskontakte 5, 6 nahezu vollständig von der Umhüllung 8 umgeben sind, und dadurch vom Medium 4 sowohl thermisch als auch elektrisch isoliert sind. Die Anschlusskontakte 5, 6 sind beispielsweise als Stanzgitter ausgeführt. Am Kontaktsockel 7 ist ein Sensorsignal abgreifbar.
Durch diese Anordnung ist die Gefahr eines Kurzschlusses zwischen den Anschlussdrähten 1, 2 bzw. zwischen den Anschlusskontakten 5, 6 insbesondere durch Späne, wie sie in einem Motor oder einem Getriebe durch Abrieb zwischen sich drehenden Teilen nicht selten vorkommen, gering gehalten.
Die Anschlusskontakte 5, 6 in Fig. 2 stehen jeweils in elektrisch und wärmeleitendem Kontakt mit einer Vorrichtung 9, die der Einfachheit halber ein Teil des Anschlusskontakts 5, 6 ist.

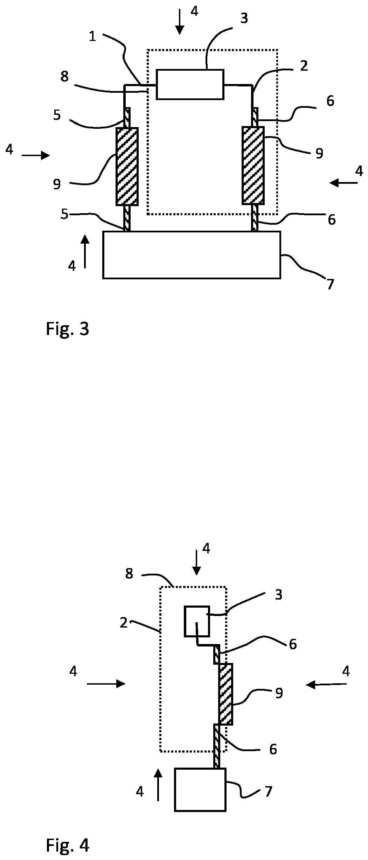

Fig. 4 zeigt eine Seitenansicht der Anordnung. Dabei ist zumindest ein Teil der Vorrichtung 9 nicht von der Umhüllung umgeben, und ist somit mit dem Medium 4 direkt wärmeleitend in Kontakt. Dadurch, dass die Kontaktoberfläche der Vorrichtung 9, die frei von der Umhüllung 8 ist, und somit mit dem Medium 4 direkt wärmeleitend in Kontakt steht, größer ist als die Kontaktoberfläche des Anschlusskontakts 5, 6 mit dem Medium 4, ist die die Temperatur übertragende Fläche der Anordnung relativ groß. Das führt zu einer relativ kurzen Ansprechzeit des Messvorgangs. Dadurch können auch schnelle Temperaturschwankungen des Mediums 4 erfasst werden.

Eine weitere Verkürzung der Ansprechzeit des Messvorgangs wird durch die Anordnung in Fig. 3 erreicht. Dadurch, dass ein großer Teil des einen Anschlussdrahtes 1 und der zugehörige Anschlusskontakt 5 einschließlich der dazugehörigen Vorrichtung 9 frei von der Umhüllung 8 sind, wird bei gleichzeitiger Kurzschlusssicherheit eine weitere Erhöhung der wärmeleitenden Kontaktoberfläche der Anordnung 6 mit dem Medium 4 erzielt.

## Patentansprüche

1. Anordnung eines Sensors, umfassend einen Sensorkörper (3) und zwei Anschlussdrähte (1, 2), zur Messung der Temperatur eines Mediums (4) in einem Kraftfahrzeug, wobei
der Sensorkörper (3) mittels einer den Sensorkörper (3) vollständig umgebenden Umhüllung (8) elektrisch und thermisch vom Medium (4) isoliert ist, wobei der Sensorkörper (3) mit dem Medium im wesentlichen über die Anschlussdrähte (1, 2) wärmeleitend in Kontakt steht, **dadurch gekennzeichnet, dass** jeder Anschlussdraht (1, 2) über einen separaten Anschlusskontakt (5, 6) mit einem Kontaktsockel (7) elektrisch leitend verbunden ist, wobei am Kontaktsockel (7) ein Sensorsignal abgreifbar ist, mindestens ein Teil mindestens eines Anschlusskontakts (5, 6) nicht von der Umhüllung (8) umgeben ist, und somit mit dem Medium (4) direkt wärmeleitend in Kontakt ist,
die elektrisch isolierende Umhüllung (8) aus einem Material wie einem Duroplast oder einem Thermoplast ist, und
der thermische Kontakt des Anschlusskontakts (5, 6) mit dem Medium (4) mittels einer Vorrichtung (9) hergestellt ist, wobei die Kontaktoberfläche der Vorrichtung (9), die nicht von der Umhüllung (8) umgeben ist, uns somit mit dem Medium (4) direkt wärmeleitend in Kontakt ist, größer ist als die Kontaktoberfläche des Anschlusskontakts (5, 6).

2. Anordnung eines Sensors nach Anspruch 1, **dadurch gekennzeichnet, dass** die Anschlusskontakte (5, 6) als Stanzgitter ausgeführt sind.

3. Anordnung eines Sensors nach Anspruch 1 oder 2, **dadurch gekennzeichnet, dass** die Vorrichtung (9) jeweils ein Teil des Anschlusskontakts (5, 6) ist.

4. Anordnung eines Sensors nach einem der vorhergehenden Ansprüche , **dadurch gekennzeichnet, dass** die Umhüllung (8) eine Umspritzung, ein Verguss oder ein mehrteiliges Gehäuse ist.

5. Anordnung eines Sensors nach einem der vorhergehenden Ansprüche, **dadurch gekennzeichnet, dass** der Sensor ein Widerstand mit einem positiven oder negativen Temperaturkoeffizienten ist.

## Claims

1. Sensor arrangement, comprising a sensor body (3) and two connection wires (1, 2), for measuring the temperature of a medium (4) in a motor vehicle, wherein
the sensor body (3) is electrically and thermally insulated from the medium (4) by means of a covering (8) which completely surrounds the sensor body (3), wherein
the sensor body (3) is in thermally conductive contact with the medium substantially by means of the connection wires (1, 2), **characterized in that**
each connection wire (1, 2) is electrically conductively connected to a contact base (7) by means of a separate connection contact (5, 6), wherein a sensor signal can be tapped off from the contact base (7), at least one part of the at least one connection contact (5, 6) is not surrounded by the covering (8), and is therefore in direct thermally conductive contact with the medium (4), the electrically insulating covering (8) is composed of a material such as a thermosetting plastic or a thermoplastic, and the connection contact (5, 6) establishes thermal contact with the medium (4) by means of an apparatus (9), wherein the contact surface of the apparatus (9), which surface is not surrounded by the covering (8) and is therefore in direct thermally conductive contact with the medium (4), is larger than the contact surface of the connection contact (5, 6).

2. Sensor arrangement according to Claim 1, **characterized in that**
the connection contacts (5, 6) are designed as stamped grids.

3. Sensor arrangement according to Claim 1 or 2, **characterized in that**
the apparatus (9) is a part of the connection contact (5, 6) in each case.

4. Sensor arrangement according to one of the preceding claims, **characterized in that**
the covering (8) is an encapsulation, a casting or a multipartite housing.

5. Sensor arrangement according to one of the preceding claims, **characterized in that**
the sensor is a resistor with a positive or negative temperature coefficient.

## Revendications

1. Arrangement d'un capteur, comprenant un corps de capteur (3) et deux fils de raccordement (1, 2), servant à mesurer la température d'un fluide (4) dans un véhicule automobile,
le corps de capteur (3) étant isolé électriquement et thermiquement du fluide (4) au moyen d'un enrobage (8) qui enveloppe complètement le corps de capteur (3),
le corps de capteur (3) se trouvant en contact thermoconducteur avec le fluide pour l'essentiel par le biais des fils de raccordement (1, 2),
**caractérisé en ce que**
chaque fil de raccordement (1, 2) est relié de manière électriquement conductrice à une embase de contact (7) par le biais d'un contact de raccordement (5, 6) séparé, un signal de capteur pouvant être prélevé au niveau de l'embase de contact (7),
au moins une partie d'au moins un contact de raccordement (5, 6) n'étant pas enveloppé par l'enrobage (8) et se trouvant ainsi directement en contact thermoconducteur avec le fluide (4),
l'enrobage (8) électriquement isolant étant constitué d'un matériau tel qu'une résine thermodurcissable ou un thermoplastique et
le contact thermique du contact de raccordement (5, 6) avec le fluide (4) étant établi au moyen d'un dispositif (9), la surface de contact du dispositif (9) qui n'est pas entourée par l'enrobage (8), est qui se trouve ainsi directement en contact thermoconducteur avec le fluide (4), étant plus grande que la surface de contact du contact de raccordement (5, 6).

2. Arrangement d'un capteur selon la revendication 1, **caractérisé en ce que** les contacts de raccordement (5, 6) sont réalisés sous la forme d'une grille estampée.

3. Arrangement d'un capteur selon la revendication 1 ou 2, **caractérisé en ce que** le dispositif (9) est respectivement une partie du contact de raccordement (5, 6).

4. Arrangement d'un capteur selon l'une des revendications précédentes, **caractérisé en ce que** l'enrobage (8) est en surmoulage, un scellement ou un boîtier en plusieurs parties.

5. Arrangement d'un capteur selon l'une des revendications précédentes, **caractérisé en ce que** le capteur est une résistance à coefficient de température positif ou négatif.
